# EUROPÄISCHE PATENTSCHRIFT

(11) **EP 2 656 084 B1**
(45) Veröffentlichungstag und Bekanntmachung des Hinweises auf die Patenterteilung: **25.02.2015**
(21) Anmeldenummer: 11804563.2
(22) Anmeldetag: 21.12.2011
(51) Int. Cl.: G01P 3/487, G01P 3/495, H01F 7/02

(54) **MAGNETBAUEINHEIT**
MAGNET ASSEMBLY
UNITÉ MODULAIRE MAGNÉTIQUE

(30) Priorität: 22.12.2010 DE 102010055481
(43) Veröffentlichungstag der Anmeldung: 30.10.2013
(73) Patentinhaber: Continental Automotive GmbH, 30165 Hannover (DE)
(72) Erfinder: KERN, Thorsten Alexander, 64665 Alsbach (DE); WALTHER, Andreas, 63486 Bruchköbel (DE)
(86) Internationale Anmeldenummer: PCT/EP2011/073543
(87) Internationale Veröffentlichungsnummer: WO 2012/085051

(56) Entgegenhaltungen:
- EP-B1- 0 902 880
- DE-U1-202008 000 822
- FR-A1- 2 774 227
- US-A- 3 790 889

## Beschreibung

Die Erfindung bezieht sich auf eine Magnetbaueinheit mit einem scheibenartigen Magneten aus überwiegend metallischem Werkstoff, der eine Durchgangsbohrung aufweist und mit der Durchgangsbohrung auf einen Bereich einer Welle aus Kunststoff mit Presssitz aufsetzbar ist.

Durch die Sprödigkeit des Materials des Magneten kann es beim Aufpressen des Magneten auf die Welle zu einem Sprengen des Magneten kommen.

Diese Gefahr besteht auch über die Lebensdauer der Magnetbaueinheit durch Alterung und Versprödung des Magnetmaterials.

Zu einem Sprengen des Magneten kann es auch bei einer Temperaturerhöhung aufgrund des wesentlich höheren Ausdehnungskoeffizienten des Materials der Welle gegenüber dem Material des Magneten kommen.

Weiterhin kann sich die Haltekraft des Magneten auf der Welle durch ein Fließen des Kunststoffmaterials der Welle insbesondere über die Lebensdauer der Magnetbaueinheit reduzieren.

Aufgabe der Erfindung ist es daher, eine Magnetbaueinheit der eingangs genannten Art zu schaffen, die bei kostengünstiger Herstellbarkeit eine dauerhaft feste Anordnung des Magneten auf der Welle ohne Gefahr einer Sprengung des Magneten ermöglicht.

Es wird weiter auf das Dokument DE 20 2008 000822 U1 verwiesen, welches die Merkmale des Oberbegriffs von Anspruch 1 zeigt.

Diese Aufgabe wird erfindungsgemäß dadurch gelöst, dass die Welle in dem Bereich des aufgesetzten Magneten einen Durchmesser besitzt, der kleiner als der Durchmesser der Durchgangsbohrung ist und dass die Welle im Bereich des aufgesetzten Magneten mit einer Mehrzahl radial hervorstehender Ansätze ausgebildet ist, die gleichmäßig am Umfang der Welle verteilt angeordnet sind und zur Längsachse der Welle einen Radius aufweisen, dessen Zweifaches vor dem Aufsetzen des Magneten auf die Ansätze der Welle Übermaß gegenüber dem Durchmesser der Durchgangsbohrung aufweist.

Da keine enge sondern nur eine grobe Tolerierung des Durchmessers der Durchgangsbohrung des Magneten und des Radius im Bereich der Ansätze erforderlich ist, ist die Magnetbaueinheit kostengünstig herstellbar.

Zu einem dauerhaft festen Sitz des Magneten auf der Welle ohne bei Temperaturerhöhung den Magneten zu sprengen dienen die Zwischenräume zwischen den radial hervorstehenden Ansätzen, in die sowohl bei Montage des Magneten als auch über die Lebensdauer der Magnetbaueinheit das überschüssige Material der Ansätze fließen kann.

Übermaß ist bei der Passung mit der der Magnet auf der Welle sitzt, der vor dem Zusammenfügen der beiden Teile bestehende Abstand zwischen der Passfläche der Ansätze und der Passfläche der Durchgangsbohrung, wenn das radiale Istmaß der Welle an den Ansätzen größer ist als das der Durchgangsbohrung.

Zu einer einfachen Herstellbarkeit durch einfaches Entformen der Welle führt es, wenn die Ansätze Stege sind, die sich parallel zur Längsachse der Welle erstrecken.

Erstrecken sich dabei die Stege ein- oder beidseitig axial aus der Durchgangsbohrung des Magneten heraus, so fließt das Kunststoffmaterial der Stege axial außerhalb der oder den Mündungen der Durchgangsbohrung um ein bestimmtes Maß radial nach außen.

Damit werden axiale Anschläge erzeugt, durch die eine axiale Sicherung des Magneten auf der Welle gegen Verrutschen durch Formschluss geschaffen wird.

Zu einer besonders konzentrischen Anordnung des Magneten auf der Welle führt es, wenn die Welle mit einer ungeraden Anzahl an Stegen ausgebildet ist, wobei die Welle mit drei Stegen ausgebildet sein kann, die sich in Umfangsrichtung zwischen 20° und 60°, insbesondere um 40° erstrecken.

Durch diese Erstreckung der Stege in Umfangsrichtung ist ein Volumen zwischen den Stegen sichergestellt, das ausreicht das fließende Material der Welle aufzunehmen.

Zur einfachen Montage in die Sollposition des Magneten auf der Welle kann die Welle an einem axialen Ende des mit den Ansätzen ausgebildeten Bereichs eine radial hervorstehende Anschlagschulter aufweisen und der Magnet bis zur Anlage an der Anschlagschulter auf die Welle aufsetzbar sein.

Laufen die Stege an ihrem der Anschlagschulter entgegengesetzten Ende rampenartig zur zylindrischen Mantelfläche der Welle aus, so bilden sich an diesen Enden keine Anschläge, die ein Aufsetzen des Magneten behindern und ggf. zu einem Spanen an den Stegen führen können, da der Magnet mit seiner Durchgangsbohrung über die Rampen auf die Stege aufgleitet.

Die Welle kann in einem von dem Bereich der Ansätze axial beabstandeten Bereich als Schneckenwelle ausgebildet sein.

Die von der Schneckenwelle übertragenen Drehmomente führen aufgrund der festen Anordnung des Magneten auf der Welle nicht zu einem Relativverdrehen des Magneten zur Welle.

Ein Ausführungsbeispiel der Erfindung ist in der Zeichnung dargestellt und wird im Folgenden näher beschrieben. Es zeigen:

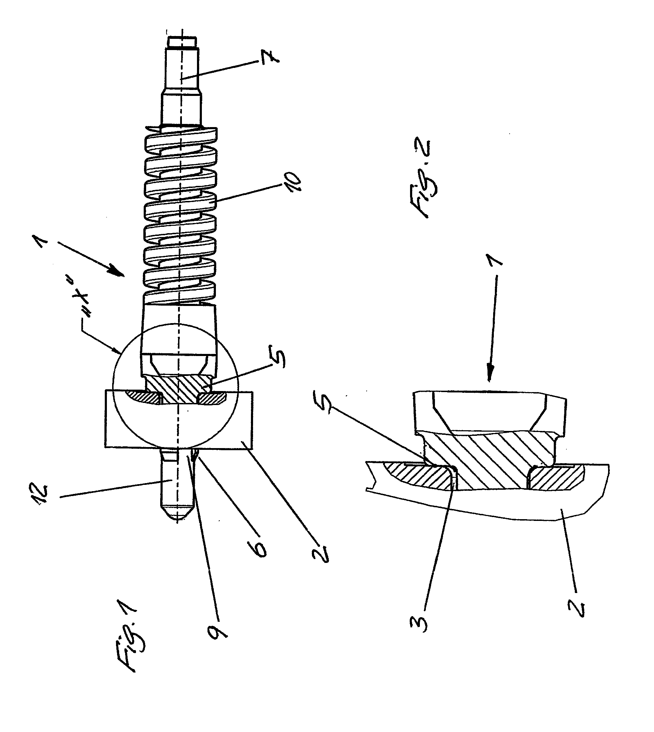

- Figur 1: eine Seitenansicht einer Magnetbaueinheit,
- Figur 2: einen vergrößerten Ausschnitt "X" der Magnetbaueinheit nach Figur 1,

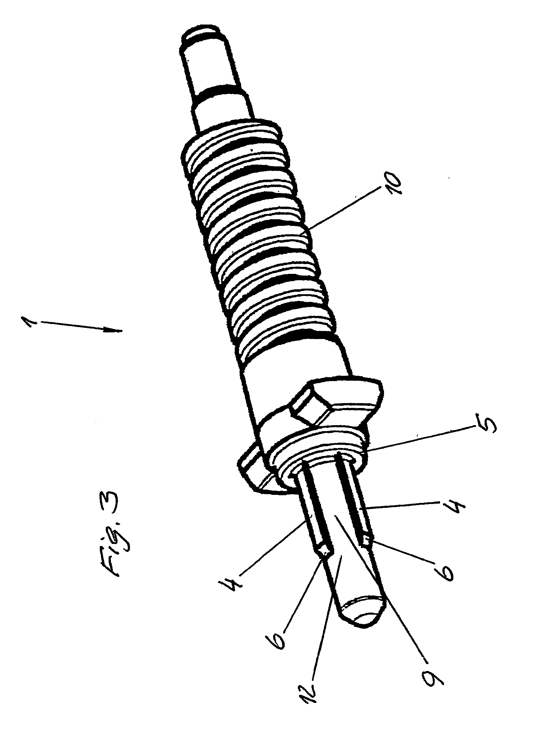

- Figur 3: eine perspektivische Ansicht einer Welle der Magnetbaueinheit nach Figur 1,

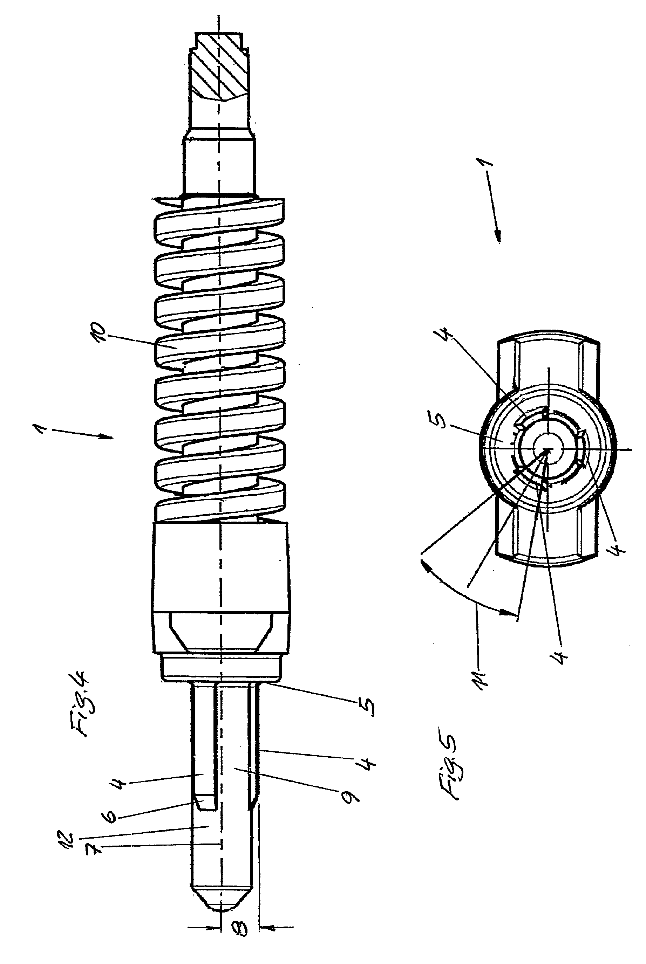

- Figur 4: eine Seitenansicht der Welle der Magnetbaueinheit nach Figur 1,
- Figur 5: eine Stirnansicht der Welle der Magnetbaueinheit nach Figur 1.

Die dargestellte Magnetbaueinheit weist eine Welle 1 aus Kunststoff auf, auf die in einem Endbereich 12 der Welle 1 ein als Dauermagnet ausgebildeter, eine Durchgangsbohrung 3 aufweisender, überwiegend aus einem metallischen Werkstoff bestehender Magnet 2 mit einem Presssitz aufgesetzt ist.

Die Welle 1 besitzt im Endbereich 12 einen Durchmesser, der kleiner ist als der Durchmesser der Durchgangsbohrung 3 des Magneten 2.

In dem Bereich der Welle 1, in dem der scheibenartige Magnet aufgesetzt ist, ist die Welle 1 mit drei radial hervorstehenden, sich parallel zur Längsachse 7 der Welle erstreckenden Stegen 4 ausgebildet, die gleichmäßig am Umfang der Welle 1 verteilt angeordnet sind und sich bis zu einer radial hervorstehenden Anschlagschulter 5 der Welle 1 erstrecken.

Die Länge der Stege 4 ist größer als die axiale Länge des Magneten 2, so dass sie aus der Durchgangsbohrung 3 herausragen.

An ihrem der Anschlagschulter 5 entgegengesetzten Ende 6 laufen die Stege 4 rampenartig zur zylindrischen Mantelfläche des Endbereichs 12 der Welle 1 aus.

Jeder der Stege 4 erstreckt sich in Umfangsrichtung um einen Winkel 11 von 40°.

Vor dem Aufsetzen des Magneten 2 auf die Welle 1 weist das zweifache des Radius 8 der Stege 4 zur Längsachse 7 der Welle Übermaß gegenüber dem Durchmesser der Durchgangsbohrung 3 auf.

Als Beispiel für die Größenordnung kann das Übermaß bei einem Durchmesser der Durchgangsbohrung 3 von 1,35 ± 0,015 mm größer als 8/100 mm sein.

Wird der Magnet 2 mit seiner Durchgangsbohrung 3 bis zur Anlage an der Anschlagschulter 5 auf die Stege 4 aufgeschoben, fließt das überschüssige Material der Stege 4 in die Zwischenräume 9 zwischen die Stege 4, so dass der Magnet 2 zwar fest auf der Welle 1 im Bereich der Stege 4 sitzt, aber mit keiner radialen Spannung beaufschlagt wird, die zu einem Bersten des Magneten 2 führen kann.

An den aus der Durchgangsbohrung 3 herausragenden Enden 6 der Stege 4 kommt es zu einem radialen Aufwölben der Stege 4, wodurch eine axiale Sicherung des Magneten 2 in seiner Einbauposition erzeugt wird.

Auf der den Stegen 4 abgewandten Seite der Anschlagschulter 5 ist die Welle 1 als Schneckenwelle 10 ausgebildet.

## Patentansprüche

1. Magnetbaueinheit mit einem scheibenartigen Magneten aus überwiegend metallischem Werkstoff, der eine Durchgangsbohrung aufweist und mit der Durchgangsbohrung auf einen Bereich einer Welle aus Kunststoff aufsetzbar ist, wobei die Welle (1) in dem Bereich des aufgesetzten Magneten (2) einen Durchmesser besitzt, der kleiner als der Durchmesser der Durchgangsbohrung ist und wobei die Welle (1) im Bereich des aufgesetzten Magneten (2) mit einer Mehrzahl radial hervorstehender Ansätze ausgebildet ist, die gleichmäßig am Umfang der Welle (1) verteilt angeordnet sind, **gekennzeichnet dadurch, dass** die radial hervorstehenden Ansätze (4) zur Längsachse (7) der Welle (1) einen Radius (8) aufweisen, dessen Zweifaches vor dem Aufsetzen des Magneten (2) auf die Ansätze der Welle (1) Übermaß gegenüber dem Durchmesser der Durchgangsbohrung (3) aufweist, und dass der Magnet (2) mit der Durchgangsbohrung (3) auf den Bereich der Welle (1) aus Kunststoff mit Presssitz aufsetzbar ist.

2. Magnetbaueinheit nach Anspruch 1, **dadurch gekennzeichnet, dass** die Ansätze Stege (4) sind, die sich parallel zur Längsachse (7) der Welle (1) erstrecken.

3. Magnetbaueinheit nach Anspruch 2, **dadurch gekennzeichnet, dass** die Stege (4) sich ein- oder beidseitig axial aus der Durchgangsbohrung (3) des Magneten (2) heraus erstrecken.

4. Magnetbaueinheit nach einem der Ansprüche 2 und 3, **dadurch gekennzeichnet , dass** die Welle (1) mit einer ungeraden Anzahl an Stegen (4) ausgebildet ist.

5. Magnetbaueinheit nach Anspruch 4, **dadurch gekennzeichnet, dass** die Welle (1) mit drei Stegen (4) ausgebildet ist, die sich in Umfangsrichtung zwischen 20° und 60° erstrecken.

6. Magnetbaueinheit nach Anspruch 4, **dadurch gekennzeichnet, dass** die Stege (4) sich in Umfangsrichtung um 40° erstrecken.

7. Magnetbaueinheit nach einem der vorhergehenden Ansprüche, **dadurch gekennzeichnet, dass** die Welle (1) an einem axialen Ende des mit den Ansätzen ausgebildeten Bereichs eine radial hervorstehende Anschlagschulter (5) aufweist und der Magnet (2) bis zur Anlage an der Anschlagschulter (5) auf die Welle (1) aufsetzbar ist.

8. Magnetbaueinheit nach Anspruch 7, **dadurch gekennzeichnet, dass** die Stege (4) an ihrem der Anschlagschulter (5) entgegengesetzten Ende (6) rampenartig zur zylindrischen Mantelfläche der Welle (1) auslaufen.

9. Magnetbaueinheit nach einem der vorhergehenden Ansprüche, **dadurch gekennzeichnet, dass** die Welle (1) in einem von dem Bereich der Ansätze axial beabstandeten Bereich als Schneckenwelle (10) ausgebildet ist.

## Claims

1. Magnet assembly with a disk-shaped magnet of predominantly metallic material, which has a through-hole and by means of the through-hole can be placed on a region of a shaft made of plastic in the region of the applied magnet (2), the shaft (1) having a diameter which is smaller than the diameter of the through-hole, and the region of the applied magnet (2), the shaft (1) being formed with a multiplicity of radially projecting protrusions which are arranged evenly distributed on the circumference of the shaft (1), **characterized in that** the radially projecting protrusions (4), with respect to the longitudinal axis (7) of the shaft (1) have a radius (8), the double of which is oversized in relation to the diameter of the through-hole (3) before application of the magnet (2) on the protrusions of the shaft (1), and **in that** the magnet (2), by means of the through-hole (3), can be placed on the region of the shaft (1) made of plastic by means of a press fit.

2. Magnet assembly according to Claim 1, **characterized in that** the protrusions are webs (4) which extend parallel to the longitudinal axis (7) of the shaft (1).

3. Magnet assembly according to Claim 2, **characterized in that** the webs (4) extend axially out of the through-hole (3) of the magnet (2) on one or both sides.

4. Magnet assembly according to one of Claims 2 and 3, **characterized in that** the shaft (1) is formed with an odd number of webs (4).

5. The magnet assembly according to Claim 4, **characterized in that** the shaft (1) is formed with three webs (4) which extend between 20º and 60º in the circumferential direction.

6. Magnet assembly according to Claim 4, **characterized in that** the webs (4) extend over 40º in the circumferential direction.

7. Magnet assembly according to any of the preceding claims, **characterized in that** the shaft (1) has a radially protruding stop shoulder (5) at one axial end of the region formed with the protrusions, and the magnet (2) can be placed on the shaft (1) until it rests on the stop shoulder (5).

8. Magnet assembly according to Claim 7, **characterized in that** at their end (6) opposite the stop shoulder (5), the webs (4) run out in the manner of a ramp to the cylindrical casing surface of the shaft (1).

9. Magnet assembly according to any of the preceding claims, **characterized in that** the shaft (1) is formed as a worm screw shaft (10) in a region axially spaced from the region of the protrusions.

## Revendications

1. Module magnétique comprenant un aimant de type en disque en un matériau d'une manière prépondérante métallique, qui a un trou traversant et qui, par le trou traversant, peut être mis sur une partie d'un arbre en matière plastique, dans lequel
l'arbre (1) a, dans la partie où l'aimant (2) est mis, un diamètre, qui est plus petit que le diamètre du trou traversant et dans lequel l'arbre (1) est constitué, dans la partie où l'aimant (2) est mis, en ayant une multiplicité de saillies faisant saillie radialement, qui sont réparties uniformément sur le pourtour de l'arbre (1),
**caractérisé en ce que**
les saillies (4) faisant saillie radialement ont, par rapport à l'axe (7) longitudinal de l'arbre (1), un rayon (8), dont le double, avant que l'aimant (2) soit mis sur les saillies de l'arbre (1), a un excès par rapport au diamètre du trou (3) traversant
et **en ce que** l'aimant (2) peut, par le trou (3) traversant, être mis à ajustement serré sur la partie de l'arbre (1) en matière plastique.

2. Module magnétique suivant la revendication 1, **caractérisé en ce que** les saillies sont des nervures (4), qui s'étendent parallèlement à l'axe (7) longitudinal de l'arbre (1).

3. Module magnétique suivant la revendication 2, **caractérisé en ce que** les nervures (4) s'étendent axialement d'un côté ou des deux côtés, hors du trou (3) traversant de l'aimant (2).

4. Module magnétique suivant l'une des revendications 2 et 3, **caractérisé en ce que** l'arbre (1) est constitué en ayant un nombre impair de nervures (4).

5. Module magnétique suivant la revendication 4, **caractérisé en ce que** l'arbre (1) est constitué en ayant trois nervures (4), qui s'étendent dans la direction périphérique entre 20° et 60°.

6. Module magnétique suivant la revendication 4, **caractérisé en ce que** les nervures (4) s'étendent à 40° dans la direction périphérique.

7. Module magnétique suivant l'une des revendications précédentes, **caractérisé en ce que** l'arbre (1) a, sur une extrémité axiale de la partie constituée en ayant les saillies, un épaulement (5) de butée en saillie radialement et l'aimant (2) peut être mis sur l'arbre (1) jusqu'à s'appliquer à l'épaulement (5) de butée.

8. Module magnétique suivant la revendication 7, **caractérisé en ce que** les nervures (4) s'étendent à leur extrémité (6) opposée à l'épaulement (5) de butée, en forme de rampe, par rapport à la surface latérale cylindrique de l'arbre (1).

9. Module magnétique suivant l'une des revendications précédentes, **caractérisé en ce que** l'arbre (1) est constitué sous la forme d'un arbre (10) de vis dans une partie à distance axialement de la partie des saillies.
